# EUROPEAN PATENT APPLICATION

(11) **EP 3 872 651 A1**
(43) Date of publication of application: **01.09.2021**
(21) Application number: 20862000.5
(22) Date of filing: 08.09.2020
(51) Int. Cl.: G06F 16/735

(54) **DETERMINATION METHOD AND APPARATUS FOR VIDEO DISTRIBUTION TIMELINESS**

(30) Priority: 03.01.2020 CN 202010005825
(71) Applicant: Baidu Online Network Technology (Beijing) Co., Ltd, Beijing 100085 (CN)
(72) Inventor: YU, Tianbao, Beijing 100085 (CN); DENG, Tiansheng, Beijing 100085 (CN); DU, Peng, Beijing 100085 (CN); YUN, Ting, Beijing 100085 (CN); CHEN, Guoqing, Beijing 100085 (CN); CHEN, Zhengnan, Beijing 100085 (CN)
(74) Representative: Poskett, Oliver James
(86) International application number: PCT/CN2020/113970
(87) International publication number: WO 2021/135358

(57) **Abstract**

The present application discloses a video distribution timeliness determining method and an apparatus, and relates to video distribution technology in the field of data processing. A specific implementation scheme is: parsing a video to be distributed to obtain video-related information of the video to be distributed; determining a timeliness period of the video to be distributed according to the video-related information, where the timeliness period is used to indicate an effective duration corresponding to the video to be distributed; and determining timeliness end time of the video to be distributed according to initial time of the video to be distributed and the timeliness period. Compared with the prior art, it does not dependent on timeliness labeling experience of a reviewer. Therefore, it is not interfered by subjective factors of the reviewer, and a labeling quality is stable. In addition, there is no need to train the reviewer, which saves manpower and material resources and also improves a determining efficiency of video timeliness.

## Description

This application claims priority to Chinese Patent Application No. 202010005825.8, which was filed with the China National Intellectual Property Administration on January 3, 2010 and titled "video distribution timeliness determining method and apparatus". The disclosure of the above patent application is incorporated herein by reference in its entirety.

### TECHNICAL FIELD

The present invention relates to the field of video distribution technologies and, in particular, to a video distribution timeliness determining method and an apparatus.

### BACKGROUND

An information flow recommendation system is used to provide users with continuously updated media resources, in which videos account for a high proportion. Unlike active search for the videos, the videos recommended by the information flow recommendation system to the users are videos that would not make the user feel outdated. In other words, each of the videos should have a timeliness period that adaptive to its distribution, and the recommendation system should stop distributing the corresponding video after the timeliness period.

In the prior art, timeliness of all the videos is manually labelled. For example, a reviewer would label the timeliness of one video as strong timeliness based on subjective experience, and the recommendation system then distributes the video within a duration corresponding to the strong timeliness.

However, a manual labeling method is seriously interfered by subjective factors, and different reviewers may have different labeling results for the same video, thus a labeling quality is unstable. Furthermore, a video magnitude is huge, and the manual labeling method is very inefficient.

### SUMMARY

A video distribution timeliness determining method and an apparatus are provided.

According to a first aspect, a video distribution timeliness determining method is provided, which is applied to a video distribution timeliness determining apparatus, and the method includes:
parsing a video to be distributed to obtain video-related information of the video to be distributed;
determining a timeliness period of the video to be distributed according to the video-related information, where the timeliness period is used to indicate an effective duration corresponding to the video to be distributed; and
determining timeliness end time of the video to be distributed according to initial time of the video to be distributed and the timeliness period.

Since the above method is executed by the apparatus and does not dependent on timeliness labeling experience of the reviewer. Therefore, it is not interfered by subjective factors of the reviewer, and a labeling quality is stable. In addition, there is no need to train the reviewer, which saves manpower and material resources and also improves a determining efficiency of video timeliness.

Optionally, the video-related information includes at least one of the following information: title, author, speech, video, subtitles, characters and title syntax analysis.

Optionally, the determining a timeliness period of the video to be distributed according to the video-related information includes:
determining a first period by performing text classification on the title;
determining a second period by performing news recognition on the video;
determining a third period by recognizing a keyword of at least one of the speech, the subtitles, the characters and the title syntax analysis;
determining a fourth period according to the author; and
determining a period with a shortest duration among the first period, the second period, the third period and the fourth period as the timeliness period of the video to be distributed.

Since each information in the video-related information may correspond to an effective duration, the present application provides the above four ways for determining the period. The timeliness period of the video to be distributed can be finally determined with referred to four periods after corresponding periods have been determined by the above four ways, respectively, which solve a problem of a low accuracy caused by determining a final timeliness period in a single way.

Optionally, the determining a first period by performing text classification on the title includes:
classifying the title through a fast text classification model to obtain a text category corresponding to the title; and
determining the first period according to the text category corresponding to the title and a first mapping relationship, where the first mapping relationship represents a correspondence between a text category and a period.

Optionally, the determining a second period by performing news recognition on the video includes:
recognizing the video through a neural network model to obtain a video type corresponding to the video; and
determining the second period according to the video type corresponding to the video and a second mapping relationship, where the second mapping relationship represents a correspondence between a video type and a period.

Optionally, the video types in the second mapping relationship include: news; and a period corresponding to a news video is shortest.

Optionally, the determining a third period by recognizing a keyword of at least one of the speech, the subtitles, the characters and the title syntax analysis includes:
converting the speech into first text information through speech recognition technology;
converting the subtitles into second text information through image text recognition technology;
recognizing a keyword of at least one of the characters, the title syntax analysis, the first text information and the second text information to obtain at least one keyword;
determine a period respectively corresponding to each of the at least one keyword according to the at least one keyword and a third mapping relationship; and
determining a period with a shortest duration among the period respectively corresponding to the at least one keyword as the third period.

Optionally, the determining a fourth period according to the author includes:
determining the fourth period according to the author of the video to be distributed and a fourth mapping relationship, where the fourth mapping relationship represents a correspondence between an author and a period.

According to a second aspect, the present application provides a video distribution timeliness determining apparatus, including:
a parsing module, configured to parse a video to be distributed to obtain video-related information of the video to be distributed;
a timeliness policy module, configured to determine a timeliness period of the video to be distributed according to the video-related information, where the timeliness period is used to indicate an effective duration corresponding to the video to be distributed; and
a timeliness deciding module, configured to determine timeliness end time of the video to be distributed according to initial time of the video to be distributed and the timeliness period.

Optionally, the video-related information includes at least one of the following information: title, author, speech, video, subtitles, characters and title syntax analysis.

Optionally, the timeliness strategy module includes: a title text classifying unit, a news recognizing unit, a keyword recognizing unit, an author recognizing unit and a determining unit;
the title text classifying unit is configured to determine a first period by performing text classification on the title;
the news recognizing unit is configured to determine a second period by performing news recognition on the video;
the keyword recognizing unit is configured to determine a third period by recognizing a keyword of at least one of the speech, the subtitles, the characters and the title syntax analysis;
the author recognizing unit is configured to determine a fourth period according to the author; and
the determining unit is configured to determine a period with a shortest duration among the first period, the second period, the third period and the fourth period as the timeliness period of the video to be distributed.

Optionally, the title text classifying unit is specifically configured to:
classify the title through a fast text classification model to obtain a text category corresponding to the title; and
determine the first period according to the text category corresponding to the title and a first mapping relationship, where the first mapping relationship represents a correspondence between a text category and a period.

Optionally, the news recognizing unit is specifically configured to:
recognize the video through a neural network model to obtain a video type corresponding to the video; and
determine the second period according to the video type corresponding to the video and a second mapping relationship, where the second mapping relationship represents a correspondence between a video type and a period.

Optionally, the video types in the second mapping relationship include: news; and a period corresponding to a news video is shortest.

Optionally, the keyword recognizing unit is specifically configured to:
convert the speech into first text information through speech recognition technology;
convert the subtitles into second text information through image text recognition technology;
recognize a keyword of at least one of the characters, the title syntax analysis, the first text information and the second text information to obtain at least one keyword;
determine a period respectively corresponding to the at least one keyword according to the at least one keyword and a third mapping relationship; and
determine a period with a shortest duration among the period respectively corresponding to the at least one keyword as the third period.

Optionally, the author recognizing unit is specifically configured to:
determine the fourth period according to the author of the video to be distributed and a fourth mapping relationship, where the fourth mapping relationship represents a correspondence between an author and a period.

According to a third aspect, the present application provides an electronic device, including:
at least one processor; and
a memory communicatively connected with the at least one processor; where,
the memory stores instructions executable by the at least one processor, and the instructions are executed by the at least one processor to enable the at least one processor to execute the video distribution timeliness determining method.

According to a fourth aspect, the present application provides a non-transitory computer-readable storage medium, storing computer instructions, where the computer instructions are used to enable the computer to execute the video distribution timeliness determining method.

The video distribution timeliness determining method and apparatus provided in the present application does not dependent on timeliness labeling experience of a reviewer. Therefore, it is not interfered by subjective factors of the reviewer, and a labeling quality is stable. In addition, there is no need to train the reviewer, which saves manpower and material resources and also improves a determining efficiency of video timeliness.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF DRAWINGS

The accompanying drawings are used to better understand the present solution, and do not constitute a limitation to the present application. In which:
FIG. 1 is a schematic flowchart of Embodiment 1 of a video distribution timeliness determining method provided by the present application;
FIG. 2 is a schematic flowchart of Embodiment 2 of a video distribution timeliness determining method provided by the present application;
FIG. 3 is a schematic diagram of a first mapping relationship provided by the present application;
FIG. 4 is a schematic diagram of a second mapping relationship provided by the present application;
FIG. 5 is a schematic diagram of a third mapping relationship provided by the present application;
FIG. 6 is a schematic diagram of a fourth mapping relationship provided by the present application;
FIG. 7 is a schematic structural diagram of an embodiment of a video distribution timeliness determining apparatus provided by the present application; and
FIG. 8 is a block diagram of an electronic device provided by the present application.

### DESCRIPTION OF EMBODIMENTS

Exemplary embodiments of the present application are described below with reference to accompanying drawings, which include various details of the embodiments of the present application to facilitate understanding, and these embodiments should be considered as merely exemplary. Therefore, those skilled in the art should realize that various changes and modifications can be made to the embodiments described herein without departing from the scope and spirit of the present application. Likewise, for clarity and conciseness, descriptions of well-known functions and structures are omitted in the following description.

Videos recommended by an information flow recommendation system to users should be videos that do not make the users feel outdated. In order to achieve this recommendation effect, in the prior art, timeliness of each video is labeled in a manually way, and the recommendation system will further distribute the videos based on the timeliness that manually labeled. For example, a reviewer label the timeliness of a video as strong timeliness based on subjective experience, and the recommendation system then distributes the video within a duration corresponding to the strong timeliness.

However, adopting the manual labeling method will have the following problems: it is seriously interfered by subjective factors, and different reviewers may have different labeling results for the same video, thus a labeling quality is unstable; it has a poor flexibility, and accessing of new video resource and changing of labeling standards requires retraining of the reviewer, which consumes a lot of manpower and material resources; the magnitude of the video is huge, and the manual labeling method is very inefficient.

Taking into account the above technical problems in the prior art, the present application provides a method and a video distribution timeliness determining apparatus, and the timeliness determining apparatus can be integrated in the information flow recommendation system. After the video to be distributed is input into the apparatus, the apparatus can determine the timeliness of the video to be distributed by executing the video distribution timeliness determining method provided in the present application, and transmit the timeliness to a module of the information flow recommendation system for distributing the video, and the module will complete the distribution of the video. The entire process does not require manual intervention, which could solve the above-mentioned technical problems in the prior art.

A process of determining the timeliness of the video to be distributed by executing a timeliness determining method provided in the present application by the timeliness determining apparatus described above is introduced as follows: the timeliness determining apparatus parses to obtain video-related information of the video to be distributed after receiving the video to be distributed, such as title, author, speech, video, subtitles and so forth; since each of these video-related information may correspond to a period, thus multiple periods can be determined based on these video-related information, and then the period with a shortest duration thereof is taken as the timeliness period of the video to be distributed, finally, timeliness end time of the video to be distributed is determined by combining with initial time of the video to be distributed, and then the timeliness end time is transmitted to a video distributing module, so that the module can complete distribution of the video to be distributed before the timeliness end time. Compared with a manual labeling for the timeliness in the prior art, since the above method is executed by the apparatus and does not dependent on timeliness labeling experience of the reviewer, thus it is not interfered by subjective factors of the reviewer, and a labeling quality is stable, and there is no need to train the reviewer, which saves manpower and material resources and also improves a determining efficiency of video timeliness.

The implementation of the video distribution timeliness determining method provided by the present application will be described in detail below with reference to specific embodiments.

### Embodiment 1

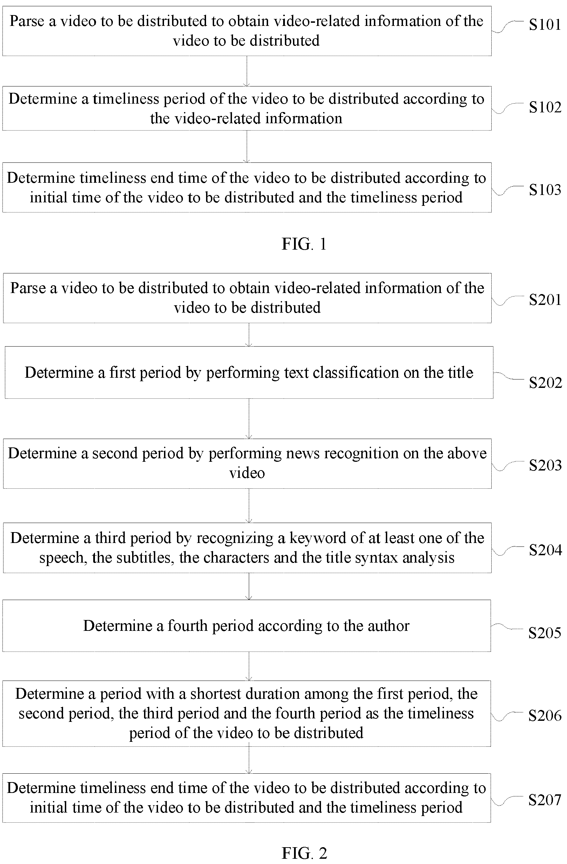

FIG. 1 is a schematic flowchart of Embodiment 1 of a video distribution timeliness determining method provided by the present application. The video distribution timeliness determining method provided in the present embodiment can be executed by the timeliness determining apparatus described above. As shown in FIG. 1, the video distribution timeliness determining method provided in the present embodiment includes:
S101, parse a video to be distributed to obtain video-related information of the video to be distributed.

Optionally, the video-related information of the video to be distributed may include at least one of the following information: title, author, speech, video, subtitles, characters and title syntax analysis.

In a possible implementation, after the user uploads the video to be distributed to the timeliness determining apparatus, the timeliness determining apparatus parses a file name of the video to be distributed to obtain the title and author of the video to be distributed, and parses the video to be distributed to obtain the speech, subtitles and video of the video to be distributed, where the parsed video can be the video to be distributed itself with speech and subtitles, or it can be a cartoon clip without speech and subtitles. On the basis of the parsed title, the title will be processed by Natural Language Processing (NLP) to obtain the title syntax analysis; and on the basis of the parsed video, characters in the video will be face-recognized to obtain the characters with the neural network.

Optionally, a file format corresponding to the title, author, characters and title syntax analysis is a text format, such as .txt, .doc., .docx, .wps and so forth. A file format corresponding to the speech is an audio format, such as: MP3, MIDI, WMA, VQF, AMR and so forth. A file format corresponding to the subtitles is a picture format, such as: bmp, jpg, png, tif, gif and so forth. A file format corresponding to the video is a video format, such as: wmv, asf, asx and so forth.

A prasing principle for parsing the video to obtain the above-mentioned various information can be referred to the prior art, which will not be repeated in the present application.

S102, determining a timeliness period of the video to be distributed according to the video-related information, where the timeliness period is used to indicate an effective duration corresponding to the video to be distributed.

In a possible implementation, one corresponding period can be determined according to each information of the title, author, speech, video, subtitles, characters, and title syntax analysis obtained by parsing in S101, and a period with a shortest duration can be taken as the timeliness period of the video to be distributed in S102 after obtaining multiple periods.

Specifically, the period corresponding to each of the foregoing information can be determined through methods such as text classification, news recognition, keyword recognition and author recognition.

S103, determine timeliness end time of the video to be distributed according to initial time of the video to be distributed and the timeliness period.

It should be noted that the initial time in step S103 can be obtained when parsing the video to be distributed, or it can be obtained by parsing to obtain the title, author, characters and other information, extracting a search keyword from these information, and searching the keyword in a search engine.

The following example illustrates:
Assuming that the initial time of the video to be distributed is October 1, 2019, and the timeliness period of the video to be distributed is determined by S102 to be 2 days, then the timeliness end time is the initial time plus 2 days, that is, October 3, 2019.

In the video distribution timeliness determining method provided in the present embodiment, after receiving the video to be distributed uploaded by the user, the video to be distributed is parsed to obtain the video-related information of the video to be distributed, and then the timeliness period of the video to be distributed can be determined based on the video-related information; finally, the timeliness end time of the video to be distributed is determined according to the initial time of the video to be distributed and the above timeliness period. Compared with the prior art, in which the timeliness is manually labeled, the above method is executed by the apparatus and does not dependent on the timeliness labeling experience of the reviewer, thus it is not interfered by the subjective factors of the reviewer, and a labeling quality is stable. In addition, there is no need to train the reviewer, which saves manpower and material resources, and also improves a determining efficiency of video timeliness.

### Embodiment 2

FIG. 2 is a schematic flowchart of Embodiment 2 of a video distribution timeliness determining method provided by the present application. As shown in FIG. 2, the video distribution timeliness determining method provided in the present embodiment includes:
S201, parse a video to be distributed to obtain video-related information of the video to be distributed.

The video-related information mentioned above includes at least one of the following information: title, author, speech, video, subtitles, characters and title syntax analysis. An implementation of S201 can refer to Embodiment 1, which will not be repeated in the present application.

A process of determining a period corresponding to different video-related information is introduced below through steps S202-S205.

S202, determine a first period by performing text classification on the title.

Specifically, the title is firstly classified through a fast text classification model to obtain a text category corresponding to the title. Then, the first period is determined according to the text category corresponding to the title and a first mapping relationship, where the first mapping relationship represents a correspondence between a text category and a period.

The following is an example of the present implementation:

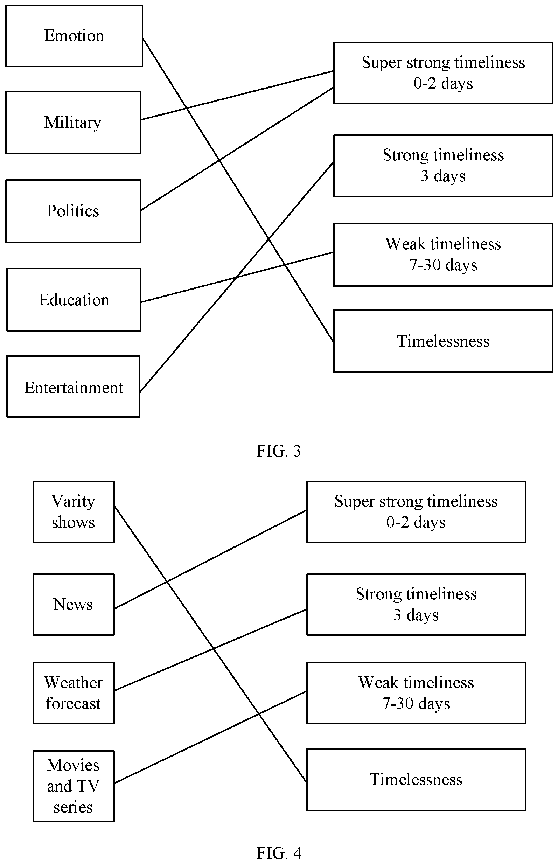

FIG. 3 is a schematic diagram of the first mapping relationship. As shown in FIG. 3, the text category may include, for example, emotion, military, politics, education, entertainment and so forth. After the title of the video to be distributed is obtained by parsing in S201, the title is input into the fast text classification model. Assuming that a text category output by the fast text classification model is entertainment, the first mapping relationship shown in FIG. 3 matches entertainment with strong timeliness and the period of the strong timeliness is 3 days, and then the first period can be determined to be 3 days.

S203, determine a second period by performing news recognition on the above video.

Specifically, the video is firstly recognized through a neural network model to obtain a video type corresponding to the video. Then, the second period is determined according to the video type corresponding to the video and a second mapping relationship, where the second mapping relationship represents a correspondence between a video type and a period.

The following is an example of the present implementation:
FIG. 4 is a schematic diagram of the second mapping relationship. As shown in FIG. 4, the video types may include, for example, variety shows, news, weather forecasts, movies and TV series and so forth. After the video of the video to be distributed is obtained by parsing in S201, the video is input to the neural network model. Assuming that a video type output by the neural network model is the news, and the second mapping relationship shown in FIG. 4 matches the news with strong timeliness, and the period of the strong timeliness is 2 days, then the second period can be determined to be 2 days.

S204, determine a third period by recognizing a keyword of at least one of the speech, the subtitles, the characters and the title syntax analysis.

It should be noted that: in the present implementation, the third period can be determined by recognizing a keyword of any of the speech, subtitles, characters and title syntax analysis for example, only a keyword of the speech is recognized to determine the third period. The third period can also be determined by recognizing keywords of any two or more of the speech, subtitles, characters and title syntax analysis, for example, the third period can be determined by recognizing keywords of all of the speech, subtitles, characters and title syntax analysis. Since different keywords correspond to different periods, multiple periods will be obtained when multiple keywords are recognized, and a period with a shortest duration among the multiple periods can be taken as the third period.

Specifically, the speech is convert into first text information firstly through speech recognition technology, the subtitles is convert into second text information through image text recognition technology, and then a keyword of at least one of the characters, the title syntax, the first text information and the second text information are recognized to obtain at least one keyword; then a period respectively corresponding to the at least one keyword is determined according to the recognized at least one keyword and the third mapping relationship, and a period with a shortest duration therein is determined as the third period.

The following is an example of the present implementation.

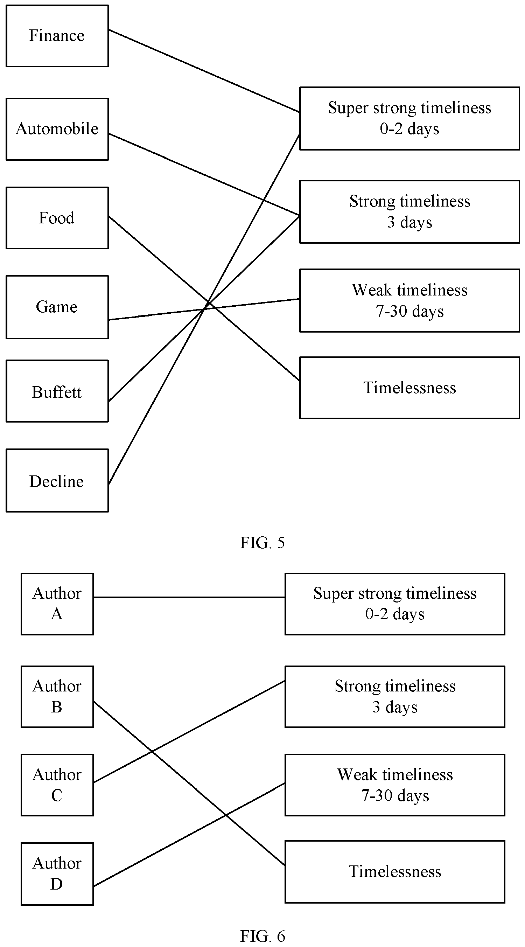

FIG. 5 is a schematic diagram of the third mapping relationship. As shown in FIG. 5, the keyword may include, for example, finance, automobile, food, game, tourism, Buffett, decline and so forth. After the speech, subtitles, characters and title syntax analysis of the video to be distributed are obtained by parsing in S201, the speech is converted into the first text information through the speech recognition technology, and the subtitles is converted into the second text information through the image text recognition technology. Assuming that a keyword recognized from the first text information is finance, a keyword recognized from the second text information is automobile, a keyword recognized from the characters is Buffett, and a keyword recognized from the title syntax analysis is decline. According to the third mapping relationship, it can be determined that periods corresponding to finance and decline are 2 days, and periods corresponding to automobile and Buffett are 3 days. Then, a period with a shortest duration can be determined as the third period, that is, 2 days.

It should be noted that: the above example uses keyword recognition for all of the speech, subtitles, characters and title syntax analysis is taken as an example to illustrate a determining process of the third period. As described above, one or more of them can also be selected to determine the third period, which will not be repeated in the present application.

S205, determine a fourth period according to the author.

Specifically, the fourth period is determined according to the author of the video to be distributed and a fourth mapping relationship, where the fourth mapping relationship represents a correspondence between an author and a period.

The following is an example of the present implementation:
FIG. 6 is a schematic diagram of the first mapping relationship. As shown in FIG. 6, the author can include, for example, author A, author B, author C and author D. After the author of the video to be distributed is obtained after parsing in S201, it should firstly determine that whether the author is in the mapping relationship shown in FIG. 6, if yes, it continues to determine the corresponding period according to the mapping relationship shown in FIG. 6. Assuming that an author obtained by parsing the video to be distributed is author A, referring to FIG. 6, it can be determined that the period corresponding to author A is 2 days, then the fourth period is 2 days.

It should be noted that: timelessness involved in FIG. 3 to FIG. 6 refers to that there is no timeliness requirements for the video to be distributed and the video to be distributed can be distributed within any duration.

S206, determine a period with a shortest duration among the first period, the second period, the third period and the fourth period as the timeliness period of the video to be distributed.

Example is illustrated as follows:
Referring to the example above, the first period determined by performing the text classification on the title is 3 days; the second period determined by performing the news recognition on the video is 2 days; the third period determined by recognizing the keyword of at least one of the speech, subtitles, characters and title syntax analysis is 2 days; the fourth period determined according to the author is 2 days. In which, the shortest period is 2 days, and the timeliness period of the video to be distributed can be determined as 2 days.

S207, determine timeliness end time of the video to be distributed according to initial time of the video to be distributed and the timeliness period.

The implementation of S207 can refer to S103 of the foregoing embodiment, which will not be repeated in the present application.

The video distribution timeliness determining method provided in the present embodiment provides an achievable way to determine the corresponding period based on different video-related information. On the basis of determining multiple periods, the timeliness period of the video to be distributed is finally determined by referring to the multiple periods, which can solve a problem of a low accuracy caused by determining a final time period in a single way.

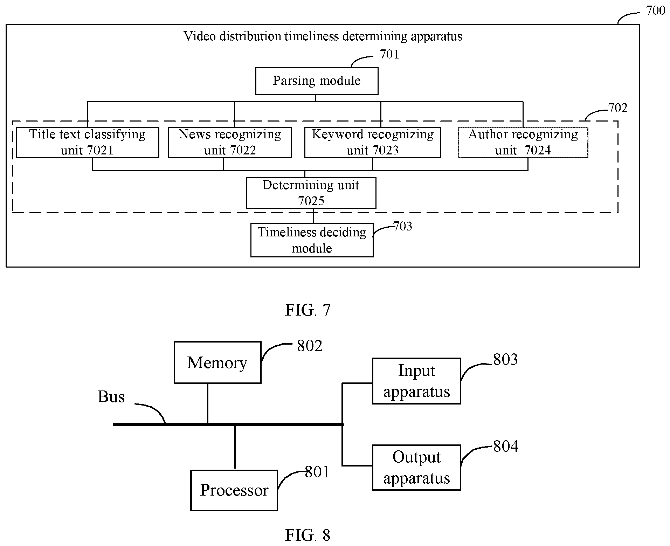

FIG. 7 is a schematic structural diagram of an embodiment of an apparatus 700 for determining video distribution timeliness provided by the present application. As shown in FIG. 7, the apparatus 700 for determining video distribution timeliness provided in the present embodiment includes:
a parsing module 701, configured to parse a video to be distributed to obtain video-related information of the video to be distributed;
a timeliness policy module 702, configured to determine a timeliness period of the video to be distributed according to the video-related information, where the timeliness period is used to indicate an effective duration corresponding to the video to be distributed; and
a timeliness deciding module 703, configured to determine timeliness end time of the video to be distributed according to initial time of the video to be distributed and the timeliness period.

Optionally, the video-related information includes at least one of the following information: title, author, speech, video, subtitles, characters and title syntax analysis.

Optionally, the timeliness strategy module 702 includes: a title text classifying unit 7021, a news recognizing unit 7022, a keyword recognizing unit 7023, an author recognizing unit 7024 and a determining unit 7025;
the title text classifying unit 7021 is configured to determine a first period by performing text classification on the title;
the news recognizing unit 7022 is configured to determine a second period by performing news recognition on the video;
the keyword recognizing unit 7023 is configured to determine a third period by recognizing a keyword of at least one of the speech, the subtitles, the characters and the title syntax analysis;
the author recognizing unit 7024 is configured to determine a fourth period according to the author; and
the determining unit 7025 is configured to determine a period with a shortest duration among the first period, the second period, the third period and the fourth period as the timeliness period of the video to be distributed.

Optionally, the title text classifying unit 7021 is specifically configured to:
classify the title through a fast text classification model to obtain a text category corresponding to the title; and
determine the first period according to the text category corresponding to the title and a first mapping relationship, where the first mapping relationship represents a correspondence between a text category and a period.

Optionally, the news recognizing unit 7022 is specifically configured to:
recognize the video through a neural network model to obtain a video type corresponding to the video; and
determine the second period according to the video type corresponding to the video and a second mapping relationship, where the second mapping relationship represents a correspondence between a video type and a period.

Optionally, the video types in the second mapping relationship include: news; and a period corresponding to a news video is shortest.

Optionally, the keyword recognizing unit 7023 is specifically configured to:
convert the speech into first text information through speech recognition technology;
convert the subtitles into second text information through image text recognition technology;
recognize a keyword of at least one of the characters, the title syntax analysis, the first text information and the second text information to obtain at least one keyword;
determine a period respectively corresponding to the at least one keyword according to the at least one keyword and a third mapping relationship; and
determine a period with a shortest duration among the period respectively corresponding to the at least one keyword as the third period.

Optionally, the author recognizing unit 7024 is specifically used to:
determine the fourth period according to the author of the video to be distributed and a fourth mapping relationship, where the fourth mapping relationship represents a correspondence between an author and a period.

The video distribution timeliness determining apparatus provided in the present embodiment can be used to execute corresponding steps in any of the foregoing method embodiments, their implementation principles and technical effects are similar, which will not be repeated in the present application.

According to the embodiments of the present application, the present application also provides an electronic device and a readable storage medium.

As shown in FIG. 8, which is a block diagram of an electronic device according to a video distribution timeliness determining method according to an embodiment of the present application. The electronic devices are intended to represent various forms of digital computers, such as laptop computers, desktop computers, workstations, personal digital assistants, servers, blade servers, mainframe computers, and other suitable computers. The electronic devices can also represent various forms of mobile devices, such as personal digital processing, cellular phones, smart phones, wearable devices and other similar computing devices. The components, their connections and relationships and their functions shown herein are merely examples, and are not intended to limit the implementation of the application described and/or required herein.

As shown in FIG. 8, the electronic device includes one or more processors 801, a memory 802, and interfaces for connecting various components, including high-speed interfaces and low-speed interfaces. The various components are connected to each other by using different buses, and can be installed on a common motherboard or installed in other ways as required. The processor may process instructions executed in the electronic device, including instructions stored in or on the memory to display graphical information of the GUI on an external input/output apparatus (such as a display device coupled to an interface). In other implementations, multiple processors and/or multiple buses may be used with multiple memories and multiple memories if necessary. Similarly, multiple electronic devices can be connected, and each device provides part of necessary operations (for example, as a server array, a group of blade servers, or a multi-processor system). One processor 801 is taken as an example in FIG. 8.

The memory 802 is the non-transitory computer-readable storage medium provided by the present application. In which, the memory stores instructions executable by at least one processor, so that the at least one processor executes the video distribution timeliness determining method provided in the present application. The non-transitory computer-readable storage medium in the present application stores computer instructions, which are used to enable a computer to execute the video distribution timeliness determining method provided by the present application.

The memory 802, as the non-transitory computer-readable storage medium, can be used to store non-transitory software programs, non-transitory computer-executable programs and modules, such as program instructions/modules corresponding to the video distribution timeliness determining method in the embodiments of the present application (for example, the parsing module 701, the timeliness strategy module 702 and the timeliness deciding module 703 shown in FIG. 7). The processor 801 executes various functional applications and data processing of a server by executing the non-transient software programs, instructions, and modules stored in the memory 802, that is, realizing the video distribution timeliness determining method in the foregoing method embodiment.

The memory 802 may include a program storage area and a data storage area, where the program storage area can store an operating system and an application program required by at least one function; the data storage area can store data that is generated for the usage of an electronic device that is used for implementing the video distribution timeliness determining method and so forth. In addition, the memory 802 may include a high-speed random access memory, and may also include a non-transitory memory, such as at least one magnetic disk storage device, a flash memory device or other non-transitory solid-state storage devices. In some embodiments, the memory 802 may optionally include a memory remotely configured with respect to the processor 801, and these remote memories may be connected to an electronic device for implementing the video distribution timeliness determining method through a network. Examples of the aforementioned networks include, but are not limited to, the Internet, corporate intranets, local area networks, mobile communication networks and combinations thereof.

The electronic device of the video distribution timeliness determining method may further include: an input apparatus 803 and an output apparatus 804. The processor 801, the memory 802, the input apparatus 803 and the output apparatus 804 may be connected through a bus or in other ways, a connection through the bus is taken as an example in FIG. 8.

The input apparatus 803 can receive input digital or character information, and generate key signal input related to the user settings and function control of the electronic device used to implement the video distribution timeliness determining method, examples of the key signal input are input apparatus such as touch screen, keypad, mouse, trackpad, touch pads, pointing sticks, one or more mouse buttons, trackballs, joysticks and so forth. The output apparatus 804 may include a display device, an auxiliary lighting apparatus (for example, LED), a tactile feedback apparatus (for example, a vibration motor) and so forth. The display device may include, but is not limited to, a liquid crystal display (LCD), a light emitting diode (LED) display and a plasma display. In some embodiments, the display device may be a touch screen.

Various implementations of the systems and technologies described herein can be implemented in digital electronic circuit systems, integrated circuit systems, specific ASICs (application specific integrated circuits), computer hardware, firmware, software and/or combinations thereof. These various implementations may include: being implemented in one or more computer programs, the one or more computer programs may be executed and/or interpreted on a programmable system including at least one programmable processor, the programmable processor can be a dedicated or general-purpose programmable processor that can receive data and instructions from a storage system, at least one input apparatus and at least one output apparatus, and transmit the data and instructions to the storage system, the at least one input apparatus and the at least one output apparatus.

These computing programs (also called programs, software, software applications or codes) include machine instructions of the programmable processor, and these computing programs can be executed using high-level procedures, and/or object-oriented programming languages and/or assembly/machine language. As used herein, the terms "machine-readable medium" and "computer-readable medium" refer to any computer program product, device and/or apparatus (such as magnetic disks, optical disks, memory, programmable logic devices (PLD)) used to provide machine instructions and/or data to the programmable processor, which includes a machine-readable media that receive the machine instructions as machine-readable signals. The term "machine-readable signal" refers to any signal used to provide the machine instructions and/or data to the programmable processor.

In order to provide interaction with the user, the system and technology described herein can be implemented on a computer, and the computer has: a display apparatus used for displaying information to the user (for example, a CRT (cathode ray tube) or LCD (liquid crystal display) monitor)); and a keyboard and pointing apparatus (for example, a mouse or a trackball), through which the user can provide input to the computer. Other types of apparatus can also be used to provide interaction with the user; for example, the feedback provided to the user can be any form of sensory feedback (for example, visual feedback, auditory feedback or tactile feedback); and the input from the user can be received in any form (including acoustic input, speech input or tactile input) .

The systems and technologies described herein can be implemented in a computing system that includes back-end components (for example, as a data server), or a computing system that includes middleware components (for example, an application server), or a computing system that includes front-end components (for example, a user computer with a graphical user interface or web browser, through which the user can interact with the implementation of the system and technology described herein), or a computing system includes any combination of such back-end components, middleware components or front-end components. The components of the system can be connected to each other through any form or medium of digital data communication (for example, a communication network). Examples of the communication networks include: local area network (LAN), wide area network (WAN) and the Internet.

The computer system can include clients and servers. The client and server are generally far away from each other and usually interact through the communication network. The relationship between the client and the server is generated through running the computer program on the corresponding computers that having a client-server relationship with each other.

According to the technical solution of the embodiment of the present application, compared with the manual timeliness labeling in the prior art, since the technical solution of the embodiment of the present application is executed by the apparatus and does not dependent on timeliness labeling experience of the reviewer. Therefore, it is not interfered by subjective factors of the reviewer, and a labeling quality is stable. In addition, there is no need to train the reviewer, which saves manpower and material resources, and also improves a determining efficiency of video timeliness.

It should be understood that the various forms of processes shown above can be used to reorder, add or delete steps. For example, the steps described in the present application can be performed in parallel, sequentially, or in a different order, as long as the desired result of the technical solution disclosed in the present application can be achieved, this is not limited herein.

The foregoing specific implementations do not constitute a limitation on the protection scope of the present application. Those skilled in the art should understand that various modifications, combinations, sub-combinations, and substitutions can be made according to design requirements and other factors. Any modifications, equivalent replacements and improvements made within the spirit and principles of the present application shall be included in the protection scope of the present application.

## Claims

1. A video distribution timeliness determining method, applied to a video distribution timeliness determining apparatus, and comprising:
parsing a video to be distributed to obtain video-related information of the video to be distributed;
determining a timeliness period of the video to be distributed according to the video-related information, wherein the timeliness period is used to indicate an effective duration corresponding to the video to be distributed; and
determining timeliness end time of the video to be distributed according to initial time of the video to be distributed and the timeliness period.

2. The method according to claim 1, wherein the video-related information comprises at least one of the following information: title, author, speech, video, subtitles, characters and title syntax analysis.

3. The method according to claim 2, wherein the determining a timeliness period of the video to be distributed according to the video-related information comprises:
determining a first period by performing text classification on the title;
determining a second period by performing news recognition on the video;
determining a third period by recognizing a keyword of at least one of the speech, the subtitles, the characters and the title syntax analysis;
determining a fourth period according to the author; and
determining a period with a shortest duration among the first period, the second period, the third period and the fourth period as the timeliness period of the video to be distributed.

4. The method according to claim 3, wherein the determining a first period by performing text classification on the title comprises:
classifying the title through a fast text classification model to obtain a text category corresponding to the title; and
determining the first period according to the text category corresponding to the title and a first mapping relationship, wherein the first mapping relationship represents a correspondence between a text category and a period.

5. The method according to claim 3, wherein the determining a second period by performing news recognition on the video comprises:
recognizing the video through a neural network model to obtain a video type corresponding to the video; and
determining the second period according to the video type corresponding to the video and a second mapping relationship, wherein the second mapping relationship represents a correspondence between a video type and a period.

6. The method according to claim 5, wherein the video types in the second mapping relationship comprise news; and a period corresponding to a news video is shortest.

7. The method according to claim 3, wherein the determining a third period by recognizing a keyword of at least one of the speech, the subtitles, the characters and the title syntax analysis comprises:
converting the speech into first text information through speech recognition technology;
converting the subtitles into second text information through image text recognition technology;
recognizing a keyword of at least one of the characters, the title syntax analysis, the first text information and the second text information to obtain at least one keyword;
determining a period respectively corresponding to the at least one keyword according to the at least one keyword and a third mapping relationship; and
determining a period with a shortest duration among the period respectively corresponding to the at least one keyword as the third period.

8. The method according to claim 3, wherein the determining a fourth period according to the author comprises:
determining the fourth period according to the author of the video to be distributed and a fourth mapping relationship, wherein the fourth mapping relationship represents a correspondence between an author and a period.

9. A video distribution timeliness determining apparatus, comprising:
a parsing module, configured to parse a video to be distributed to obtain video-related information of the video to be distributed;
a timeliness policy module, configured to determine a timeliness period of the video to be distributed according to the video-related information, wherein the timeliness period is used to indicate an effective duration corresponding to the video to be distributed; and
a timeliness deciding module, configured to determine timeliness end time of the video to be distributed according to initial time of the video to be distributed and the timeliness period.

10. An electronic device, comprising:
at least one processor; and
a memory communicatively connected with the at least one processor; wherein,
the memory stores instructions executable by the at least one processor, and the instructions are executed by the at least one processor to enable the at least one processor to execute the method according to any one of claims 1-8.

11. A non-transitory computer-readable storage medium, storing computer instructions, wherein the computer instructions are used to enable the computer to execute the method according to any one of claims 1-8.
